# EUROPEAN PATENT SPECIFICATION

(11) **EP 2 607 194 B1**
(45) Date of publication and mention of the grant of the patent: **20.04.2016**
(21) Application number: 12198041.1
(22) Date of filing: 19.12.2012
(51) Int. Cl.: B60T 11/04, B60T 11/10, B60T 8/32, B60T 1/06, B62L 3/02, B62K 19/38

(54) **Brake control apparatus for bar-handle-type vehicle**
Bremssteuervorrichtung für Stangengriff-Fahrzeuge
Appareil de commande de frein pour type de véhicule équipé de guidon

(30) Priority: 20.12.2011 JP 2011278549
(43) Date of publication of application: 26.06.2013
(73) Proprietor: Nissin Kogyo Co., Ltd., Ueda-city, Nagano (JP)
(72) Inventor: Tamai, Naotoshi, Nagano (JP); Kodama, Takuro, Nagano (JP)
(74) Representative: Hoffmann Eitle

(56) References cited:
- EP-A2- 0 796 783
- DE-A1-102009 009 269
- JP-A- H09 216 547
- JP-A- H09 240 557
- JP-A- 2005 238 901

## Description

### CROSS-REFERENCE TO RELATED APPLICATION(S)

This application claims priority/priorities from Japanese Patent Application No. 2011-278549 filed on December 20, 2011.

### FIELD

the present invention relates to a brake control apparatus for a bar-handle-type vehicle such as a motorcycle, a motor tricycle and an all terrain vehicle (ATV).

### BACKGROUND

Conventionally, there is generally known a brake control apparatus for controlling braking force in a bar-handle-type vehicle by applying fluid pressure generated by a pump (see, for example, JP-3608123-B and JP-3366174-B).

In JP-3608123-B and JP-3366174-B, a rear wheel brake is provided as a mechanical brake to be pulled or operated by a linking device, that is, the rear-wheel mechanical brake can be operated by the fluid pressure of a master cylinder unit using a brake operator.
Both Documents : JP 2005 238901 A (HONDA MOTOR CO LTD) 8 September 2005 (2005-09-08), and EP 0 796 783 A2 (NISSIN KOGYO KK [JP]) 24 September 1997 (1997-09-24) also show a rear wheel brake which is provided as a mechanical brake to be pulled or operated by a linking device, allowing the rear-wheel mechanical brake being operated by the fluid pressure of a master cylinder unit using a brake operator.

Such brake control apparatus performs control using fluid pressure, and as a fluid pressure source for operating the brake, generally, there is used a master cylinder.

Therefore, when such brake control apparatus is applied to a bar-handle-type vehicle having an existing mechanical brake, a master cylinder to be operated by operating at brake operator must be newly mounted near the brake operator of the bar handles. This makes it troublesome to incorporate the brake control apparatus onto the bar handles and raises a fear that the incorporation thereof can influence on the design of the vehicle around the bar handles.

### SUMMARY

One object of the present invention to provide a brake control apparatus which can be incorporated on a bar-handle-type vehicle without influencing the design of the vehicle around the bar handles.

Claim 1 defines a brake control apparatus for a bar-handle-type vehicle, including:
a control unit (U) for controlling the braking of the bar-handle-type vehicle using fluid pressure;
a linking device (C); and
a mechanical brake (F, R) to be pulled and operated by the linking device (C), the mechanical brake corresponding to at least one of front and rear wheel brakes (F, R),
wherein the linking device (C) includes:
   an operator-side linking device (W1, 20); and
   a wheel-brake-side linking device (W2, 30),
wherein the operator-side linking device includes:
   a first pull member (W1) to be pulled due to the operation of a brake operator (L1, L2); and
   a master cylinder unit (20) operable due to the pulled first pull member (W1) to generate fluid pressure and apply the generated fluid pressure to the control unit (U),
wherein the wheel-brake-side linking device includes:
   a cylinder unit (30) operable by fluid pressure output from the control unit (U); and
   a second pull member (W2) for pulling the mechanical brake (F, R) in linking with the operation of the cylinder unit (30), and
wherein the control unit (U), the master cylinder unit (20) and the cylinder unit (30) are disposed in other portions of a vehicle body than the bar handles thereof.

In the above configuration, when operating the brake operator, the first pull member of the operator-side linking device is pulled and the master cylinder unit is operated due to the pulled first pull member. When the master cylinder is operated, fluid pressure is generated and the generated fluid pressure is input to the control unit.

The control unit controls (or does not control) the fluid pressure input from the master cylinder unit to a given level of fluid pressure and outputs it to the cylinder unit. On receiving the fluid pressure from the control unit, the cylinder unit is operated and the second pull member is pulled to operate the mechanical brake. Thus, braking force is applied to the wheel.

Also, since the control unit, the master cylinder unit and the cylinder unit requiring a relatively large installation space are disposed in other portions of a vehicle body than the bar handles thereof, these units can be arranged such that they are spaced from the bar handles.

Therefore, a bar-handle-type vehicle including a mechanical brake can be easily enabled to control the brakes using fluid pressure. Also, the brake control apparatus can be installed such that an existing mechanical-type brake operator is used as is without newly providing a master cylinder around the brake operator. Thus, the brake control apparatus does not impair the design quality of the vehicle around its bar handles, thereby enhancing the versatility.

Since the brake control apparatus can be installed while using the existing mechanical-type brake operator as is, the brake control apparatus is capable of controlling the brakes using fluid pressure while keeping the operation feeling of the mechanical-type brake operator as is.

Claim 2 defines, based on Claim 1, the apparatus,
wherein the master cylinder unit (20) includes:
a cylinder (21); and
a piston (22) slidable within the cylinder (21), and
wherein the piston (22) is pulled directly by the first pull member (W1) to thereby generate fluid pressure to be applied to the control unit (U).

According to the above configuration, the pulling operation of the first pull member can be used as the operation of the piston as is. This can provide a brake control apparatus excellent in responsiveness and brake feeling.

Claim 3 defines, based on Claim 1, the apparatus,
wherein the master cylinder unit (20) includes:
a cylinder (21);
a piston (22) slidable within the cylinder (21); and
a knocker (50) rotatably pivoted near the opening of the cylinder (21) and capable of pushing the piston (22) into the cylinder (21),
wherein the knocker (50), when pulled by the first pull member (W1), pushes the piston (22) into the cylinder (21), and
wherein the piston (22), when pushed into the cylinder (21) by the knocker (50), generates fluid pressure to be applied to the control unit (U).

According to the above configuration, since it includes a knocker rotatably pivoted near the opening of the cylinder and capable of pushing the piston into the cylinder, a master cylinder normally used in a bar-handle-type vehicle can also be used as a master cylinder unit, thereby further enhancing the versatility.

Claim 4 defines, based on any one of Claims I to 3, the apparatus
wherein the master cylinder unit (20) and the cylinder unit (30) are formed as an integral body (10).

The expression "formed as an integral body" includes a case where the master cylinder unit and the cylinder unit are formed as an integral body by working a single member and also a case where the master cylinder unit and the cylinder unit are first formed of separate members and they are then assembled together integrally using a fastening member, adhesive or the like.

According to the above configuration, it can be conveniently mounted onto the bar-handle-type vehicle.

According to the present invention, it can be properly mounted onto the bar-handle-type vehicle without influencing on the design quality of the vehicle around the bar handles thereof.

### BRIEF DESCRIPTION OF DRAWING

Fig. 1 shows a brake control apparatus according to a first embodiment.
Fig. 2 shows a master cylinder unit and a cylinder unit in the brake control apparatus according to the first embodiment.
Figs. 3A and 3B show wire connections in the brake control apparatus according to the first embodiment. Fig. 3A is a transverse section view. Fig. 3B is a side view.
Fig. 4 shows a brake control apparatus according to a second embodiment.
Fig. 5 shows a master cylinder unit and a cylinder unit used in the brake control apparatus according to the second embodiment.
Fig. 6 shows a brake control apparatus according to a third embodiment.
Fig. 7 shows a brake control apparatus according to a fourth embodiment.

### DETAILED DESCRIPTION

Now, embodiments will be described with reference to the accompanying drawings. In the following description, the same elements are given the same designations and the duplicate description thereof is omitted.

### (First Embodiment)

A brake control apparatus according to a first embodiment may be suitably used in a vehicle such as a motorcycle, a motor tricycle, an all terrain vehicle (ATV) and a four-wheeled mobility scooter, for properly controlling braking force (braking fluid pressure) to be applied to the wheels of the vehicle, for example, as antilock control. Although an example where the brake control apparatus is applied to a motorcycle will be described below, the application of the brake control apparatus is not limited to such vehicle.

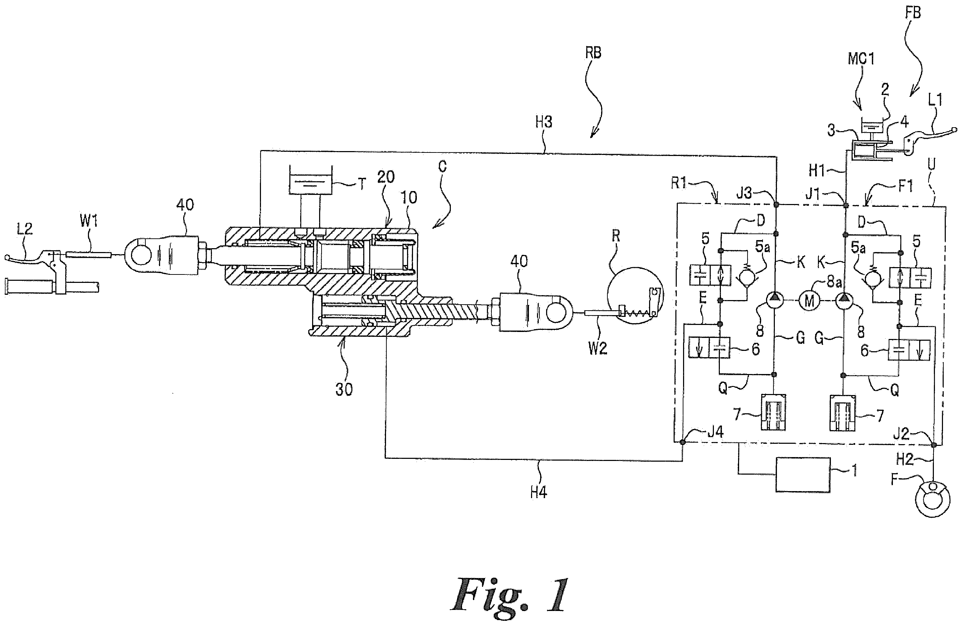

As shown in Fig. 1, the brake control apparatus of this embodiment includes a control unit U which controls a braking operation using fluid pressure. The control unit U includes a front wheel control system F1 for controlling the fluid pressure of a brake system FB on the front wheel side and a rear wheel control system R1 for controlling the fluid pressure of a brake system RB on the rear wheel side. Specifically, braking force to be applied to a wheel brake F mounted on a front wheel and braking force to be applied to a wheel brake R mounted on a rear wheel are properly controlled by a control unit 1 to thereby carry out antilock brake control on the wheel brakes F and R.

In this embodiment, the rear wheel brake R is provided as a mechanical brake to be pulled or operated by a linking device C. The linking device C includes an operator-side linking device and a wheel-brake-side linking device. The operator-side linking device includes a wire W1 serving as a first pull member to be pulled by operating a brake lever L2 (a brake operator), and a master cylinder unit 20 which is operated by pulling the wire W1 to generate fluid pressure and applies the generated fluid pressure to the control unit U.

The wheel-brake-side linking device includes a cylinder unit 30 to be operated by fluid pressure output from the control unit U, and a wire W2 serving as a second pull member which pulls the rear wheel brake R in linking with the operation of the cylinder unit 30.

In this embodiment, the master cylinder unit 20 and the cylinder unit 30 are integrally mounted on a single base member 10.

In this brake control apparatus, the control unit U, the master cylinder unit 20 and the cylinder unit 30 are disposed on other portions of a vehicle body constituting the bar-handle-type vehicle than the bar handles thereof. For example, the control unit U, the master cylinder unit 20 and the cylinder unit 30 are mounted on a vehicle body frame (such as a main frame, a front-end head pipe and a front fork and other rigid conduit), various cover members, a seat, a storage box, and other devices.

Next, the brake control apparatus will be specifically described.

The front wheel control system F1 of the control unit U is used to brake the front wheel brake F according to the operation of a brake lever L1 serving as a brake operator disposed in the bar handles (not shown) of the bar-handle-type vehicle, and includes a flow path extending from an inlet port J1 communicating with a master cylinder MC1 to an outlet port J2.

The master cylinder MC1 and the inlet port J1 are connected together by a pipe H1. The outlet port J2 is connected to the front wheel brake F through a pipe H2.

The master cylinder MC1 includes a cylinder 3 to which a brake fluid tank chamber 2 for storing brake fluid serving as operating fluid is connected, while, within the cylinder 3, there is incorporated a rod piston 4 which can be slid in the axial direction of the cylinder 3 due to the operation of the brake lever L1 to flow out the brake fluid from the tank chamber 2.

The rear wheel control system R1 of the control unit U is used to brake the rear wheel brake R according to the operation of the brake lever L2 serving as a brake operator mounted on the bar handles (not shown) of the bar-handle-type vehicle. The rear wheel control system R1 includes a flow path extending from an inlet port J3 communicating with the master cylinder unit 20 to an outlet port J4 communicating with the cylinder unit 30.

The master cylinder unit 20 and the inlet port J3 are connected together by a pipe H3. The outlet port J4 is connected to the cylinder unit 30 through a pipe H4.

As described above, the control unit U includes the front wheel control system F1 and the rear wheel control system R1, and since the respective control systems have the same structure, in the following sentences, the front wheel control system F1 will be mainly described.

The front wheel control system F 1 includes an inlet valve 5 and an outlet valve 6 respectively serving as control valves, a reservoir 7 and a pump 8.

A flow path (oil path) extending from the inlet port J1 to the inlet valve 5 is called an "output fluid pressure path D", a flow path from the inlet valve 5 to the outlet port J2 is called a "wheel fluid pressure path E", a flow path from the reservoir 7 to the pump 8 is called a "suction fluid pressure path G", and a flow path from the pump 8 to the wheel fluid pressure path E is called a "discharge fluid pressure path K". A flow path from the wheel fluid pressure path E through the outlet valve 6 to the reservoir 7 is called an "open path Q".

The inlet valve 5 and the outlet valve 6 serving as the control valves are used to switch a state where the open path Q is cut off (outlet valve 6 is closed) while opening the wheel fluid pressure path E (a pressure increasing state in a normal operation or an ABS control operation), a state where the open path Q is opened (outlet valve 6 is opened) while cutting off the wheel fluid pressure path E (a pressure decreasing state in the ABS control operation), and a state where the wheel fluid pressure path E and the open path Q are cut off (inlet valve 5 and outlet valve 6 are closed) (a holding state in the ABS control operation).

The inlet valve 5 is a normally-open electromagnetic valve interposed between the output fluid pressure path D and the wheel fluid pressure path E. Since it is normally open, the inlet valve 5 allows the brake fluid pressure from the master cylinder MC1 to be transmitted from the output fluid pressure path D through the wheel fluid pressure path E to the wheel brake F. Also, since it is closed under the control of the control unit 1 when the front wheel is going to be locked, the inlet valve 5 prevents the brake fluid pressure applied from the master cylinder MC1 from being transmitted from the output fluid pressure path D through the wheel fluid pressure path E to the wheel brake F.

A check valve 5a is parallel connected to the inlet valve 5. The check valve 5a is a valve for allowing only the inflow of the brake fluid from the wheel brake F side to the master cylinder MC1 side. In the case that the input from the brake lever L1 is removed, even when the inlet valve 5 is closed, the check valve 5a allows the brake fluid to flow from the wheel brake F to the master cylinder MC1.

The outlet valve 6 is a normally-closed electromagnetic valve interposed between the wheel fluid pressure path E and the open path Q. Although normally closed, the outlet valve 6 is opened under the control of the controller 1 when the front wheel is going to be locked, thereby enabling the brake fluid pressure acting on the wheel brake F to escape from the wheel fluid pressure path E to the open path Q (a pressure decreasing state in the ABS control operation). Thus, the brake fluid relieved to the open path Q flows into the reservoir 7 temporarily.

The reservoir 7 is disposed on the open path Q and has a function to temporarily store the brake fluid relieved from the wheel fluid pressure path E because the outlet valve 6 is opened.

The pump 8 is interposed between the suction fluid pressure path G and discharge fluid pressure path K and has a function that, when it is driven by an electric motor 8a or the like, it sucks the brake fluid temporarily stored in the reservoir 7 through the suction fluid pressure path G and returns it through the discharge fluid pressure path K to the master cylinder MC1. This can recover the pressure states of the output fluid pressure path D and the wheel fluid pressure path E the pressures of which have been decreased due to the suction of the brake fluid pressure by the reservoir 7.

Next, in the rear wheel brake system RB, the linking device C to be connected to the control unit U will be described.

The linking device C, as described above, includes the master cylinder unit 20 serving as an operator-side linking device to be connected through the wire W1 (first pull member) to the brake lever L2 and the cylinder unit 30 serving as a wheel-brake-side linking device to be connected through the wire 2 (second pull member) to the rear wheel brake R, while they are integrally mounted on the single base member 10.

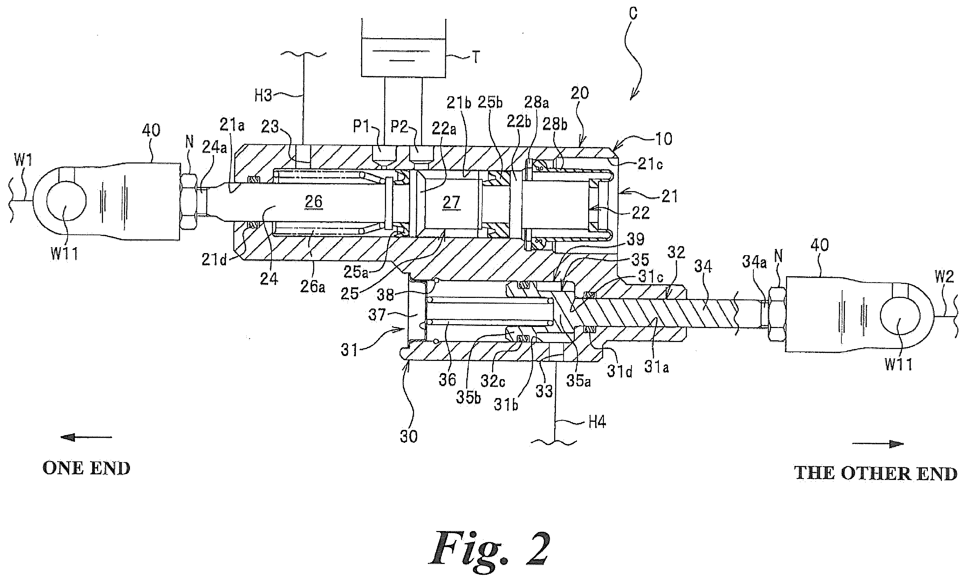

As shown in Fig. 2, the base member 10, which is made of metal such as aluminum alloy, includes a first cylinder hole 21 having a cylindrical inner surface constituting the master cylinder unit 20 and a second cylinder hole 31 having a cylindrical inner surface constituting the cylinder unit 30.

A rod piston 22 serving as a piston is slidably mounted in the first cylinder hole 21. The wire W1 is connected through a connecting member 40 to the rod piston 22, while the piston 22 is pulled or operated by the wire W1. Also, a rod piston 32 serving as a piston is slidably mounted in the second cylinder 31. The wire W2 is connected through the connecting member 40 to the rod piston 32. The rod piston 32 can be operated due to the fluid pressure output through the control unit U (can be slid toward one end side corresponding to a direction where the wire W2 is pulled), and when operated, it pulls the wire W2.

The first cylinder hole 21 provides a stepped inner wall surface the inside diameter of which increases stepwise sequentially along the axial direction of the rod piston 22 (from one end toward the other end). The first cylinder hole 21 includes a small diameter portion 21a formed in one end side thereof, a medium diameter portion 21b having a larger diameter than the small diameter portion 21a, and a large diameter portion 21c having a larger diameter than the medium diameter portion 21b. The medium diameter portion 21b includes an output port 23, and a relief port P1 and a supply port P2 respectively communicating with an oil reserve tank T, which are respectively opened up in its inner wall surface.

The rod piston 22 includes a rod portion 24 and a piston portion 25 formed integrally with the rod portion 24. The rod portion 24 is inserted into and supported on the small diameter portion 21a of the first cylinder hole 21 through a seal member 21d. The piston portion 25 includes flange portions 22a, 22b and cup seals 25a, 25b respectively arranged spaced axially. The cup seals 25a, 25b are slidably in close contact with the inner peripheral surface of the medium diameter portion 21b of the first cylinder hole 21, respectively.

In the periphery of the rod portion 24, there is formed a circular hydraulic chamber 26 which is partitioned by the cup seal 25a. In the hydraulic chamber 26, there is disposed a compressed return spring 26a for energizing the rod piston 22 in its return direction (in Fig. 2, in the right direction). Fig. 2 shows a state where the rod piston 22 is not pulled by the wire W1, that is, the brake lever L2 is not operated (it stays at the rear-most end portion on its other end side).

Also, in the periphery of the piston 25 between the two cup seals 25a and 25b, there is formed a circular supply oil chamber 27.

In a state where the rod piston 22 stays at its most-retreated position, the relief port P1 is situated just before (leftward of) the cup seal 25a to thereby allow the hydraulic chamber 26 and the oil reserve tank T to communicate with each other.

Also, regardless of the advancing and retreating positions of the rod piston 22, the supply oil chamber 27 and the oil reserve tank T are always in mutual communication through the supply port P2.

Thus, in a state where the rod piston 22 stays at its most-retreated position, the pressure of the hydraulic chamber 26 is released into the oil reserve tank T through the relief port P1. Also, when the wire W1 is pulled due to the operation of the brake lever L2 and the rod piston 22 is thereby advanced toward one end to cause the cup seal 25a to cross the relief port P1, hydraulic pressure can be generated in the hydraulic chamber 26. Thus, the hydraulic pressure is applied from the output port 23 to the inlet port J3 (see Fig. 1) of the control unit U through the pipe H3.

Also, when the pressure of the hydraulic chamber 26 reduces down to that of the supply oil chamber 27 or less in the retreating time of the rod piston 22 (while it is retreating toward the other end), the outer peripheral lip portion of the cup seal 25a is compressed due to the pressure difference between the two chambers to cause the brake fluid to flow from the supply oil chamber 27 into the hydraulic chamber 26 through the left-end-portion outer peripheral portion of the piston portion 25, thereby carrying out the supply of the brake fluid.

When the operation of the brake lever L2 is loosened, the pull of the wire W1 is loosened, and due to the energizing force of the return spring 26a, the piston 22 is returned to the other end. This reduces the fluid pressure applied from the output port 23 through the pipe H3 to the inlet port J3 of the control unit U.

Also, to the large diameter portion 21c of the first cylinder hole 21, there are assembled a stop plate 28a for preventing the rod piston 22 against removal and a dust boot 28b. The end portion of the dust boot 28b is mounted on the end portion of the piston portion 25.

To the bottom portion of the oil reserve tank T, there is assembled a protector (not shown) which, when bubbles are generated within the oil reserve tank T due to the choppy oil, prevents the bubbles from entering the cylinder.

The rod portion 24 includes in its one end portion a male screw 24a engageable with a connecting member 40.

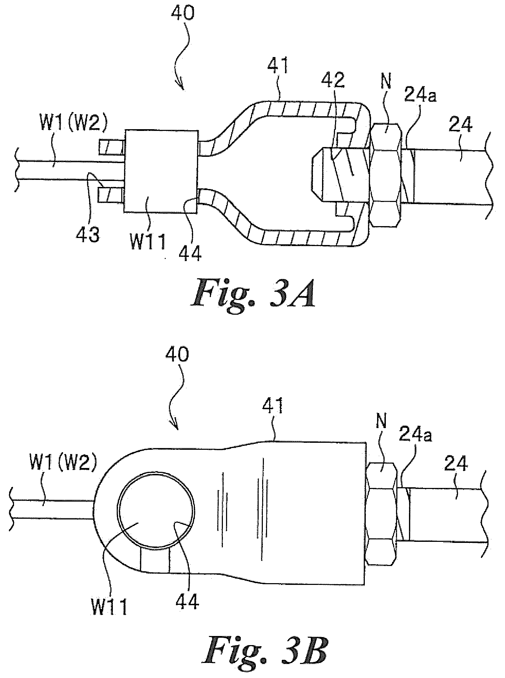

The connecting member 40, as shown in Figs. 3A and 3B, includes a frame body 41, a female screw 42 engageable with the male screw 24a of the rod portion 24, a clearance portion 43 formed in the leading end portion of the frame body 41 and allowing the insertion of the wire W1 (W2) therein, and a mounting hole 44 formed near the clearance portion 43 and allowing the mounting of a connecting pin W11 fixed to the end portion of the wire W1 (W2) therein.

One end of the rod portion 24 can be fixed to the connecting member 40 by fastening nuts N respectively engageable with the rod portion 24.

When any extension is produced in the wire W1 (W2), such extension can be absorbed by fastening the nuts N to adjust the amount of engagement of the male screw 24a with the connecting member 40.

The second cylinder hole 31, as shown in Fig. 2, provides a stepped inner wall surface having an inside diameter increasing stepwise along the axial direction of the rod piston 32 (from the other end toward one end), while it includes a small diameter portion 31a formed in its other end and a large diameter portion 31b having a larger diameter than the small diameter portion 31 a. The large diameter portion 31b includes an input port 33 opened up in its inner wall surface.

The rod piston 32 has a rod portion 34 and a piston portion 35 formed integrally with the rod portion 34. The rod portion 34 is inserted into and supported on the small diameter portion 31 a of the second cylinder hole 31 through a seal member 31d.

The piston portion 35, which has a bottomed cylindrical shape, includes a base section 35a and a peripheral wall section 35b. The base section 35a is smaller in diameter than the large diameter portion 31b of the second cylinder hole 31 and has a size allowing it to come into contact with the bottom section 31c of the large diameter portion 31b. The peripheral section 35b has a cylindrical shape facing the inner wall surface of the large diameter portion 31b of the second cylinder hole 31.

With the base section 35a in contact with the bottom section 31c of the large diameter portion 31b, there is formed a pressure chamber 39 between the base section 35a and the inner wall surface of the large diameter portion 31b. The input port 33 is in communication with the pressure chamber 39, whereby fluid pressure from the control unit U (see Fig. 1) can be applied to the pressure chamber 39 through the pipe H4.

The other end portion of a cylinder spring 36 is inserted into the peripheral wall section 35b and is secured thereto, while the cylinder spring 36 is compressed interposed between the peripheral wall section 35b and a cap (receiving member) to be pressure mounted into the one-end-side opening of the second cylinder hole 31. Thus, the rod piston 32 is energized toward its other end.

The peripheral wall section 35b extends from the peripheral edge of the base section 35a toward the cap 37, while the outer peripheral surface of the peripheral wall section 35b expands toward the large diameter portion 31b of the second cylinder hole 31 and faces the inner wall surface of the large diameter portion 31b. The peripheral wall section 35b has a circular seal groove recessed formed in its outer periphery along its peripheral direction, while a circular seal member 32c is fitted into this seal groove. The seal member 32c can be contacted with the inner wall surface of the large diameter portion 31 b to seal between the piston portion 35 and the large diameter portion 31 b.

On the inner wall surface of the large diameter portion 31b existing near the cap 37, there is provided a C ring 38 functioning as the stopper of the piston portion 35.

The rod portion 34 includes in its other end section a male screw 34a engageable with the connecting member 40. The other end section of the rod portion 34 can be fixed to the connecting member 40 by fastening the respective nuts N engageable with the rod portion 34. Thus, when fluid pressure is applied from the outlet port J4 of the control unit U to the cylinder unit 30 through the pipe H4, the rod piston 32 is caused to slide toward its one end. Consequently, the wire W2 is pulled to operate the rear wheel brake R. Therefore, braking force is applied to the rear wheel.

The controller 1 inputs measured values given from a front wheel speed sensor (not shown) and the like and controls the operations of the respective component of the rear wheel control system R1.

Next, normal brake control and anti-lock brake control to be realized by the above-structured brake control apparatus will be described.

### (Normal brake)

In the normal brake control, the front wheel control system F1 of the control unit U, as shown in Fig. 1, provides a state where a flow path from the master cylinder MC1 to the wheel brake F is in communication through an output fluid pressure path D and a wheel fluid pressure path E. Thus, by operating the brake lever L1, the brake fluid pressure can be applied to the wheel brake F through the output fluid pressure path D, the inlet valve 5 and the wheel fluid pressure path E, whereby the front wheel braking through the operation of the brake lever L1 is possible.

By returning the brake lever L1, the brake fluid applied to the wheel brake F can be returned to the master cylinder MC1 through the wheel fluid pressure path E, inlet valve 5 (check valve 5a) and output fluid pressure path D.

On the other hand, in the rear wheel control system R1 of the control unit U, the rear wheel brake R is a mechanical brake which can be pulled or operated by the linking device C, while the linking device C includes the master cylinder unit 20 and the cylinder unit 30. Thus, the system R1 is operated as follows.

That is, by operating the brake lever L2, the rod piston 22 of the master cylinder unit 20 is pulled by the wire W1 and is thereby advanced toward its one end. Specifically, the pull force of the wire W1 is transmitted as it is to the rod piston 22 to thereby drive it. As the rod piston 22 is pulled, the cup seal 25a is caused to cross the relief port P1, thereby generating fluid pressure in the hydraulic chamber 26. The generated fluid pressure is applied from the output port 23 through the pipe H3 to the inlet port J3 of the control unit U. In the rear wheel control system R1, similarly to the front wheel side, since the flow path from the inlet port J3 to the wheel brake R is in communication through the output fluid pressure path D and the wheel fluid pressure path E, the brake fluid pressure is applied via the pipe H4 to the cylinder unit 30 of the linking device 20 through the output fluid pressure path D, the inlet valve 5 and the wheel fluid pressure path E. This causes the rod piston 32 of the cylinder unit 30 to slide toward its one end, whereby the wire W2 is pulled through the rod portion 34 and the connecting member 40 to operate the rear wheel brake R. Therefore, the rear wheel braking through the operation of the brake wire L2 is possible.

As the brake lever L2 is retuned, the pulled wire W1 is returned to cause the wire W2 to return through the master cylinder unit 20, the control unit U and the cylinder unit 30, thereby removing the braking applied to the rear wheel brake R.

### (ABS control)

ABS control is executed when the front or rear wheel is going to be locked and can be realized by controlling the inlet valve 5, the outlet valve 6 and the pump 8 to select a proper one of the reducing, increasing and constantly holding states of the brake fluid pressure to be applied to the wheel brakes F and R. Which one is selected from the pressure reducing, increasing and holding states is determined by the controller 1 according to a wheel speed sensor (not shown) for a front wheel.

When the controller 1 determines that the brake fluid pressure to be applied to the wheel brake F(R) must be reduced, the "pressure reducing state" is selected, wherein the inlet valve 5 cuts off the path between the output fluid pressure path D and the wheel fluid pressure path E, while the outlet valve 6 opens the path between the wheel fluid pressure path E and the open path Q. Thus, the brake fluid of the wheel fluid pressure path E in communication with the wheel brake F(R) flows into the reservoir 7 through the open path Q, thereby reducing the brake fluid pressure applied to the wheel brake F(R).

The brake fluid temporarily poured into the reservoir 7 can be returned to the brake fluid tank chamber 2 (oil reserve tank T) by properly operating the pump 8.

When the controller 1 determines that the brake fluid pressure to be applied to the wheel brake F(R) must be held constant, the "pressure holding state" is selected, wherein the inlet valve 5 and the outlet valve 6 cut off the path between the output fluid pressure path D and the wheel fluid pressure path E and the path between the wheel fluid pressure path E and the open path Q. Thus, the brake fluid is shut up into a flow path closed by the wheel brake F(R), the inlet valve 5 and the outlet valve 6 to thereby be able to hold constant the brake fluid pressure applied to the wheel brake F(R).

When the controller 1 determines that the brake fluid pressure to be applied to the wheel brake F(R) must be increased, the "pressure increasing state" is selected, wherein the inlet valve 5 opens the path between the output fluid pressure path D and the wheel fluid pressure path E, while the outlet valve 6 cuts off the path between the wheel fluid pressure path E and the open path Q. Thus, the brake fluid pressure generated due to the operation of the brake lever L1 (L2) is applied to the wheel brake F (R), thereby increasing the brake fluid pressure applied to the wheel brake F (R).

In the above ABS control as well, since the wire W2 is pulled according to the fluid pressure output from the control unit U to the cylinder unit 30, the rear wheel braking is carried out as the braking based on the ABS control.

According to the above-described brake control apparatus of this embodiment, as the brake lever L1 is operated, the wire W1 is pulled to thereby operate the master cylinder unit 20 (rod piston 22) of the linking device C. As the master cylinder unit 20 is operated, there is generated fluid pressure, while the generated fluid pressure is input to the control unit U. The control unit U controls the fluid pressure input from the master cylinder unit 20 to given fluid pressure (or does not control) and outputs the fluid pressure to the cylinder unit 30 of the linking device C. On receiving the fluid pressure from the control unit U, the cylinder unit 30 (rod piston 32) is operated to pull the wire W2, thereby operating the mechanical-type rear wheel brake R.

Therefore, a bar-handle-type vehicle including an existing mechanical brake to be pulled by the wires W1, W2 can be easily changed to a structure capable of executing brake control using fluid pressure.

Also, since the control unit U, the master cylinder unit 20 and the cylinder unit 30, which requires a relatively wide space, are arranged in other portions of the vehicle body than the bar handles, these units can be disposed spaced from the bar handles, whereby the brake control apparatus can be installed while using the existing mechanical-type brake lever L2 as is without providing a new master cylinder around the brake lever L2. Therefore, the design of the vehicle around the bar handles is harder to be impaired, and thus the versatility of the brake control apparatus can be enhanced.

Also, since the brake control apparatus can be mounted while using the existing mechanical-type brake lever L2, the brakes can be controlled using fluid pressure while providing the operating feeling of the mechanical-type brake lever L2 as is.

Since the rod piston 22 constituting the master cylinder unit 20, when it is pulled directly by the wire W1 to be pulled due to operation of the brake lever L2, can generate fluid pressure to be applied to the control unit U, the pulling operation of the wire W1 can be used as the operation of the rod piston 22 as is, thereby enhancing responsiveness and braking feeling.

Since the master cylinder unit 20 and the cylinder unit 30 are formed integrally on the single base member 10, it can be conveniently mounted onto the bar-handle-type vehicle. That is, the master cylinder unit 20 and the cylinder unit 30 can be mounted at one time, thereby enhancing assembling performance and productivity.

### (Second Embodiment)

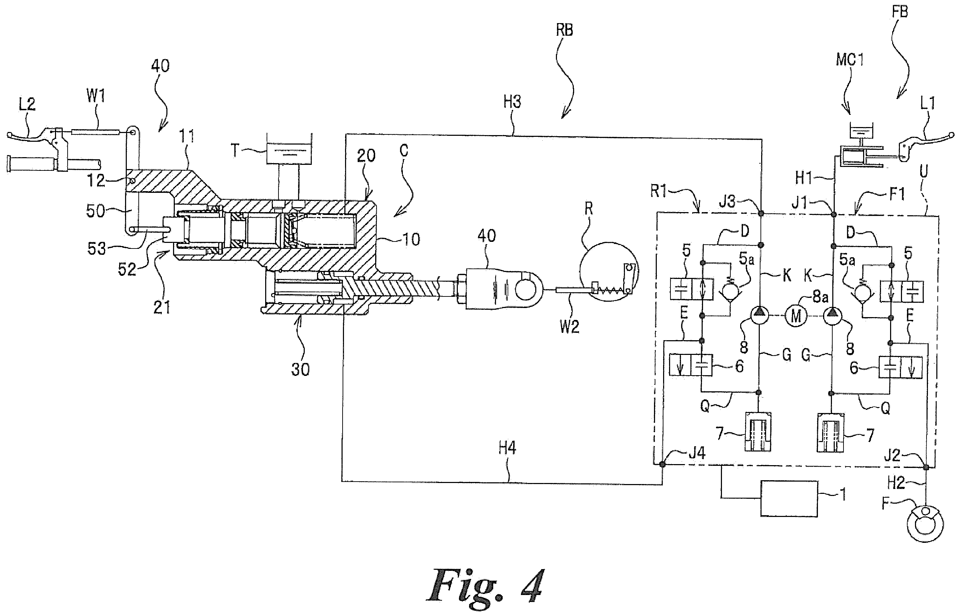

Next, a brake control apparatus according to a second embodiment will be described with reference Fig. 4. Parts thereof corresponding to those described in the first embodiment are given the same designations and thus the detailed description thereof is omitted here.

This embodiment is different from the first embodiment in that the rod piston 22 of the master cylinder unit 20 is pushed in through a knocker 50 to be pulled by the wire W1 into operation, thereby generating fluid pressure. That is, the pulling force of the wire W1 is converted through the knocker 50 to a push-in force to thereby drive the rod piston 22.

The base member 10 includes an extension portion 11 in its one end portion, while a support shaft 12 is provided on the extension portion 11. The knocker 50 is rotatably supported through the support shaft 12 near the opening of the first cylinder hole 21. The support shaft 12 is disposed in the longitudinal direction central portion of the knocker 50.

The wire W1 is connected to one end portion of the knocker 50, while the rod 53 of a pressure portion 52 to be mounted on one end portion of the rod piston 22 is connected to the other end portion of the knocker 50.

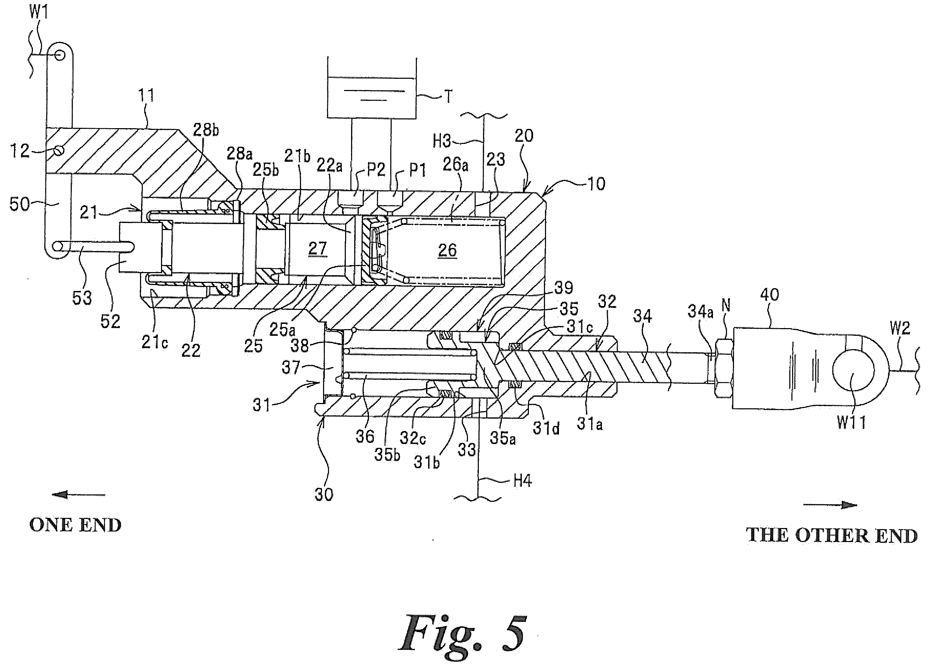

As shown in Fig. 5, the first cylinder hole 21, which has a bottomed cylindrical shape, includes a large diameter portion 21c and a medium diameter portion 21b formed sequentially from one end toward the other end, while a piston portion 25 is disposed on one end side of the medium diameter portion 21b. On the bottom portion side of the first cylinder hole 21 intervening between the cup seal 25a and the inner surface (bottom portion side inner surface) of the medium diameter portion, there is formed a hydraulic chamber 26. In the hydraulic chamber 26, there is compressed disposed a return spring 26a for energizing the rod piston 22 in the advancing direction (in Fig. 5, toward one end corresponding to the left direction).

In the periphery of the piston portion 25 between the two cup seals 25a and 25b, there is formed a circular supply oil chamber 27.

According to the thus structured brake control apparatus, in addition to the operation effects described in the first embodiment, since the knocker 50 capable of pushing in the rod piston 22 is disposed near the opening of the first cylinder hole 21, a master cylinder, which is normally used in the bar-handle-type vehicle and into which the rod piston 22 is pushed to generate fluid pressure, can be used also as the master cylinder unit 20, thereby enhancing the versatility of the brake control apparatus.

### (Third Embodiment)

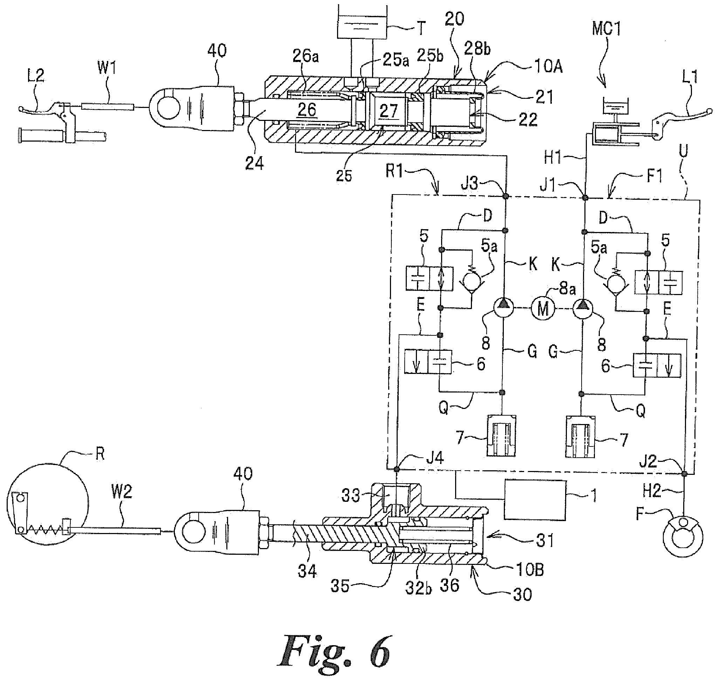

Next, a brake control apparatus according to a third embodiment will be described with reference Fig. 6. Parts thereof corresponding to those described in the first embodiment are given the same designations and thus the detailed description thereof is omitted here.

This embodiment is different from the first embodiment in that the master cylinder unit 20 and the cylinder unit 30 are structured separately from each other. The remaining parts thereof are the same as the first embodiment.

The master cylinder unit 20 is disposed on a single base member 10A and the cylinder unit 30 is disposed on a single base member 10B different from the base member 10A.

According to the above configuration, since the master cylinder unit 20 and the cylinder unit 30 are provided on their respective single base members 10A and 10B, they can be disposed in the other separate portions of the bar-handle-type vehicle than the bar handles, thereby enhancing the lay-out freedom. This contributes toward reducing the mounting space and size.

Also, it is possible to employ a lay-out where the base member 10B is disposed near the rear wheel and also an arrangement where the length of the wire W2 can be set as short as possible.

### (Fourth Embodiment)

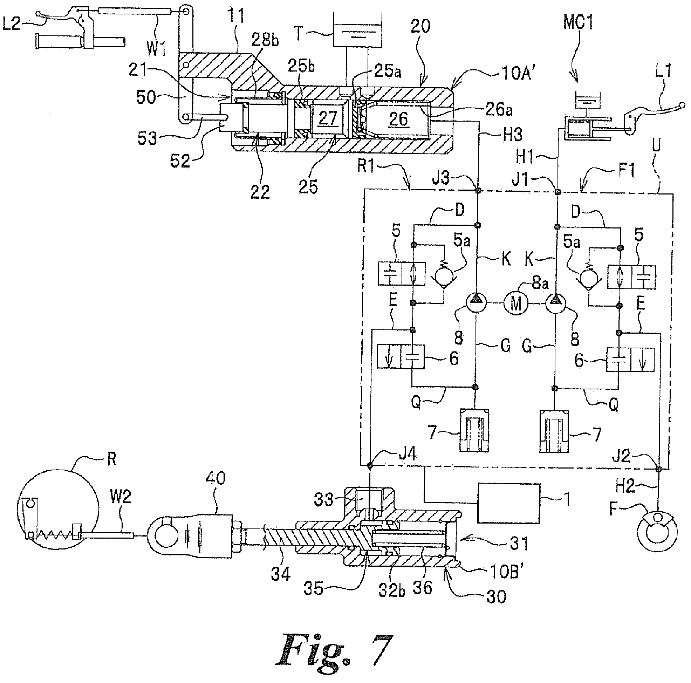

Next, a brake control apparatus according to a fourth embodiment will be described with reference Fig. 7. Parts thereof corresponding to those described in the second embodiment are given the same designations and thus the detailed description thereof is omitted here.

This embodiment is different from the second embodiment in that the master cylinder unit 20 and the cylinder unit 30 are structured separately from each other. The remaining parts thereof are the same as the second embodiment.

The master cylinder unit 20 is disposed on a single base member 10A' and the cylinder unit 30 is disposed on a single base member 10B' different from the base member 10A'.

In the base member 10A', a pipe H3 to be connected to the hydraulic chamber 26 can be connected from the open end (in Fig. 7, the right end side) of the hydraulic chamber 26.

According to the above configuration, since the master cylinder unit 20 and the cylinder unit 30 are provided on their own single base members 10A' and 10B', they can be disposed in the other separate portions of the bar-handle-type vehicle than the bar handles, thereby enhancing the lay-out freedom. This contributes toward reducing the mounting space and size.

Also, it is possible to employ a lay-out where the base member 10B' is disposed near the rear wheel and also an arrangement where the length of the wire W2 can be set as short as possible.

In the first embodiment, the rod portion 24 extends toward one end side of the base member 10 and the rod portion 34 extends toward the other end side thereof. However, the present invention is not limited thereto, and the rod portions 24 and 34 may both extend toward the same side.

Also, in the second embodiment, the knocker 50 is disposed on one end side of the base member 10 and the rod portion 34 extends toward the other end side thereof. However, the present invention is not limited thereto, and the arranging side of the knocker 50 and the extending side of the rod portion 34 may be the same side.

In the third and fourth embodiments, the single base members 10A, 10B (10A', 10B') are formed as separate members. However, they may also be assembled into an integral body using a fastening member such as a bolt.

The above embodiments exemplify the case where the mechanical brake mounting system is the rear wheel brake system. However, the present invention is not limited thereto, and the front wheel brake system may be of a mechanical brake, or both of the front and rear wheel brake systems may be of a mechanical brake.

As the first and second pull members, there are shown the wires W1 and W2. However, the present invention is not limited thereto, and rods may also be used instead of the wires W1 and W2.

Also, the wires W1 and W2 are not limited to straight wires but they may also be disposed in a curved manner or in a bent manner.

## Claims

1. A brake control apparatus for a bar-handle-type vehicle, including:
a control unit (U) for controlling the braking of the bar-handle-type vehicle using fluid pressure;
a linking device (C); and
a mechanical brake (F, R) to be pulled and operated by the linking device (C), the mechanical brake corresponding to at least one of front and rear wheel brakes (F, R),
wherein the linking device (C) includes:
an operator-side linking device (W1, 20); and
a wheel-brake-side linking device (W2, 30),
wherein the operator-side linking device includes:
a first pull member (W1) to be pulled due to the operation of a brake operator (L1, L2); and
a master cylinder unit (20) operable due to the pulled first pull member (W1) to generate fluid pressure and apply the generated fluid pressure to the control unit (U),
wherein the wheel-brake-side linking device includes:
a cylinder unit (30) operable by fluid pressure output from the control unit (U); and
a second pull member (W2) for pulling the mechanical brake (F, R) in linking with the operation of the cylinder unit (30), and
wherein the control unit (U), the master cylinder unit (20) and the cylinder unit (30) are disposed in other portions of a vehicle body than the bar handles thereof.

2. The apparatus of Claim 1,
wherein the master cylinder unit (20) includes:
a cylinder (21); and
a piston (22) slidable within the cylinder (21), and
wherein the piston (22) is pulled directly by the first pull member (W1) to thereby generate fluid pressure to be applied to the control unit (U).

3. The apparatus of Claim 1,
wherein the master cylinder unit (20) includes:
a cylinder (21);
a piston (22) slidable within the cylinder (21); and
a knocker (50) rotatably pivoted near the opening of the cylinder (21) and capable of pushing the piston (22) into the cylinder (21),
wherein the knocker (50), when pulled by the first pull member (W1), pushes the piston (22) into the cylinder (21), and
wherein the piston (22), when pushed into the cylinder (21) by the knocker (50), generates fluid pressure to be applied to the control unit (U).

4. The apparatus of any one of Claims 1 to 3
wherein the master cylinder unit (20) and the cylinder unit (30) are formed as an integral body (10).

## Patentansprüche

1. Bremsensteuerungsvorrichtung für ein Fahrzeug mit einem Lenker, beinhaltend:
eine Steuerungseinheit (U) zum Steuern des Bremsens des Fahrzeugs mit einem Lenker unter Verwendung von Fluiddruck;
eine Verbindungseinrichtung (C); und
eine mechanische Bremse (F, R), die zu ziehen ist und durch die Verbindungseinrichtung (C) betätigt wird, wobei die mechanische Bremse mindestens einer der vorderen und hinteren Radbremse (F, R) entpsricht,
wobei die Verbindungseinrichtung (C) beinhaltet:
eine Verbindungseinrichtung (W1, 20) für eine Bedienerseite; und
eine Verbindungseinrichtung (W2, 30) für eine Radbremsseite,
wobei die Verbindungseinrichtung für die Bedienerseite beinhaltet:
ein erstes Ziehelement (W1), das aufgrund der Betätigung eines Bremsenbedieners (L1, L2) gezogen werden kann; und
eine Hauptzylindereinheit (20), die aufgrund des gezogenen ersten Ziehelements (W1) betätigbar ist, um einen Fluiddruck herzustellen und den hergestellten Fluiddruck an der Steuerungseinheit (U) aufzubringen,
wobei die Verbindungseinrichtung für eine Radbremsseite beinhaltet:
eine Zylindereinheit (30), die durch Fluiddruck betätigbar ist, der von der Steuerungseinheit (U) ausgegeben wird; und
ein zweites Ziehelement (W2) zum Ziehen der mechanischen Bremse (F, R) in Verbindung mit der Betätigung der Zylindereinheit (30), und
wobei die Steuerungseinheit (U), die Hauptzylindereinheit (20) und die Zylindereinheit (30) in anderen Abschnitten eines Fahrzeugkörpers als dessen Lenker bereitgestellt sind.

2. Vorrichtung nach Anspruch 1,
wobei die Hauptzylindereinheit (20) beinhaltet:
einen Zylinder (21); und
einen Kolben (22), der innerhalb des Zylinders (21) gleitbar ist und
wobei der Kolben (22) direkt durch das erste Ziehelement (W1) gezogen wird, um dadurch einen Fluiddruck herzustellen, der an der Steuerungseinheit (U) aufgebracht wird.

3. Vorrichtung nach Anspruch 1,
wobei die Hauptzylindereinheit (20) beinhaltet:
einen Zylinder (21);
einen Kolben (22), der gleitbar in dem Zylinder (21) ist; und
einen Klopfer (50), der drehbar in der Nähe der Öffnung des Zylinders (21) gelagert ist und in der Lage ist, den Kolben (22) in den Zylinder (21) zu schieben,
wobei der Klopfer (50), wenn durch das erste Ziehelement (W1) gezogen, den Kolben (22) in den Zylinder (21) drückt, und
wobei der Kolben (22), wenn durch den Klopfer (50) in den Zylinder (21)geschoben,
einen Fluiddruck herstellt, der an der Steuerungseinheit (U) aufzubringen ist.

4. Vorrichtung nach einem der Ansprüche 1 bis 3,
wobei die Hauptzylindereinheit (20) und die Zylindereinheit (30) als ein integraler Körper (10) ausgebildet sind.

## Revendications

1. Appareil de commande de frein pour un véhicule à guidon, comportant :
une unité de commande (U) pour commander le freinage du véhicule à guidon en utilisant une pression de fluide ;
un dispositif de liaison (C) ; et
un frein mécanique (F, R) à tirer et à actionner par le dispositif de liaison (C), le frein mécanique correspondant à au moins l'un des freins de roue avant et arrière (F, R),
dans lequel le dispositif de liaison (C) comporte :
un dispositif de liaison côté opérateur (W1, 20) ; et
un dispositif de liaison côté frein de roue (W2, 30), dans lequel le dispositif de liaison côté opérateur comporte :
un premier élément de traction (W1) à tirer en raison de l'actionnement d'un opérateur de frein (L1, L2) ; et une unité de cylindre maître (20) actionnable en raison du premier élément de traction tiré (W1) pour générer la pression de fluide et appliquer la pression de fluide générée à l'unité de commande (U),
dans lequel le dispositif de liaison côté frein de roue comporte :
une unité de cylindre (30) actionnable par la pression de fluide délivrée par l'unité de commande (U) ; et
un second élément de traction (W2) pour tirer le frein mécanique (F, R) en liaison avec l'actionnement de l'unité de cylindre (30) et
dans lequel l'unité de commande (U), l'unité de cylindre maître (20) et l'unité de cylindre (30) sont agencées dans d'autres parties d'un corps de véhicule que son guidon .

2. Appareil selon la revendication 1,
dans lequel l'unité de cylindre maître (20) comporte :
un cylindre (21) ; et
un piston (22) coulissant dans le cylindre (21) et
dans lequel le piston (22) est tiré directement par le premier élément de traction (W1) pour générer de la sorte la pression de fluide à appliquer à l'unité de commande (U).

3. Appareil selon la revendication 1,
dans lequel l'unité de cylindre maître (20) comporte :
un cylindre (21) ;
un piston (22) coulissant dans le cylindre (21) ; et
un heurtoir (50) monté à rotation près de l'ouverture du cylindre (21) et capable de pousser le piston (22) dans le cylindre (21),
dans lequel le heurtoir (50) pousse le piston (22) dans le cylindre (21) lorsqu'il est tiré par le premier élément de traction (W1) et
dans lequel le piston (22) génère une pression de fluide à appliquer à l'unité de commande (U) lorsqu'il est poussé dans le cylindre (21) par le heurtoir (50).

4. Appareil selon l'une quelconque des revendications 1 à 3,
dans lequel l'unité de cylindre maître (20) et l'unité de cylindre (30) sont formées par un corps d'un seul tenant (10).
